# EUROPEAN PATENT SPECIFICATION

(11) **EP 3 303 787 B1**
(45) Date of publication and mention of the grant of the patent: **02.03.2022**
(21) Application number: 16803853.7
(22) Date of filing: 27.05.2016
(51) Int. Cl.: F01N 3/28, F01N 3/20, B01F 5/00, B01F 5/04, B01F 5/06, B01F 3/04

(54) **METHOD AND SYSTEM FOR INTRODUCING A REDUCING AGENT INTO EXHAUST GASES FROM AN INTERNAL COMBUSTION ENGINE**
VERFAHREN UND SYSTEM ZUR EINFÜHRUNG EINES REDUKTIONSMITTELS IN ABGASE AUS EINEM VERBRENNUNGSMOTOR
PROCÉDÉ ET SYSTÈME POUR INTRODUIRE UN AGENT RÉDUCTEUR DANS DES GAZ D'ÉCHAPPEMENT VENANT D'UN MOTEUR À COMBUSTION INTERNE

(30) Priority: 29.05.2015 SE 1550697
(43) Date of publication of application: 11.04.2018
(73) Proprietor: Scania CV AB, 151 87 Södertälje (SE)
(72) Inventor: BAUDIN, Micael, 752 21 Uppsala (SE)
(74) Representative: Scania CV AB
(86) International application number: PCT/SE2016/050490
(87) International publication number: WO 2016/195574

(56) References cited:
- EP-A2- 1 712 751
- WO-A1-2012/089290
- DE-A1- 4 203 807
- US-A1- 2007 274 877
- US-A1- 2014 196 440
- US-A1- 2015 037 219
- US-A1- 2015 071 828

## Description

### TECHNICAL FIELD

The present invention relates to an exhaust gas system for an internal combustion engine, a silencer comprising the exhaust gas system, a vehicle provided with the exhaust gas system and a method for exhaust gas purification in the exhaust gas system.

### BACKGROUND TO THE INVENTION AND PRIOR ART

Diesel engines are provided with exhaust purification devices with the object of reducing particles and harmful gases which occur in diesel engine exhaust gases. To regulate emissions from vehicles there are various standards and legal requirements which govern permissible levels for exhaust discharges. Vehicles are consequently provided with various kinds of purification devices for exhaust gases in an exhaust gas system in order to meet legal requirements. The exhaust gas system may be arranged for example in a silencer of a vehicle.

Silencers are used in internal combustion engines to damp engine noise and reduce emissions and are situated in the engine's exhaust system. Internal combustion engines provided with a silencer may be used in various different applications, e.g. in heavy vehicles such as trucks or buses or in passenger cars. Motorboats, ferries or ships, industrial engines and/or engine-powered industrial robots, power plants, e.g. an electric power plant provided with a diesel generator, locomotives or other applications may also have combustion engines with silencers.

To reduce gaseous nitrogen oxide (NOₓ) -emissions from internal combustion engines the so called SCR (selective catalytic reduction) system is used, which comprises a reducing agent and a catalyst with an SCR-substrate, herein after referred to as a SCR-catalyst, for purification of nitrogen oxides (NOₓ) from exhaust gases. To reduce the NOₓ-content and also to be able to convert the nitrogen oxides to less harmful gases, the exhaust gases are treated with a reducing agent, e.g. a mixture of 32.5% urea and water, often marketed with the trade name AdBlue^{®}. Injecting the agent and mixing it with the exhaust gases results in a chemical reaction whereby nitrogen gas and water are formed over the SCR-catalyst.

Urea solutions may be supplied by means of an injection arrangement which extends into the exhaust gas line. The injection arrangement has one or more outlet apertures via which the urea solution is injected into the exhaust gas line. During the operation of the internal combustion engine the exhaust gases reach usually a temperature which is high enough to vaporise the urea solution so that ammonia can be formed. However, there is often a problem that part of the urea solution does not vaporise. This part becomes attached to the inside wall surface of the exhaust gas line in an unvaporised state as urea lumps or urea crystals. The urea lumps (or the urea crystals) may over time block the exhaust gas line and disrupt the exhaust gas flow by e.g. causing a high backpressure in the exhaust system.

There have been attempts to improve vaporisation for example by generating swirl inside a vaporisation chamber. Patent application US 20140033686 A1 discloses an apparatus for distributing fluids in an exhaust gas system of an internal combustion engine. The exhaust gas system comprises an injection device, a swirl generating device comprising a plurality of gas vanes circumferentially spaced from each other and a mixing apparatus comprising at least one additional swirl generating device and a tubular vaporiser device. The exhaust tract comprises flexible coupling sections and an inner pipe or an inliner is arranged inside the exhaust tract to guide the flow and thus avoid deposits of the injected fluids and/or of reaction products in recesses and wall irregularities present with flexible decoupling sections. Such depositions can be avoided by conducting the exhaust gas through smooth-walled flow guiding elements (inner pipes) and thus at least sectionally prevent the exhaust gases from flowing past irregular wall of the decoupling section. However, US 20140033686 A1 does not disclose how to avoid depositions and how to increase the degree of vaporisation in normal smooth-walled pipes.

Thus, even though there are prior art solutions to avoid depositions and increase the degree of vaporisation there is a need to improve existing exhaust gas systems. There is also a great need for a high degree of exhaust gas purification in combustion engines.

WO 2012/089290 discloses a device for distributing fluids in exhaust systems of an internal combustion engine as per the preamble of claim 1. DE 42 03 807 relates to a device for the catalytic reduction of NOx in oxygen-containing exhaust gases using urea, with a reduction catalyst contained in an exhaust pipe and a urea tank. Z

### SUMMARY OF THE INVENTION

It is an object of the present invention to provide an exhaust gas system comprising a selective catalytic reduction (SCR) purification system comprising a vaporisation chamber that provides for a maximal vaporisation of water in a urea-containing solution to provide ammonium (NH₃). It is also an object of the invention to maximize the vaporisation by maximizing the distance the urea-containing solution travels in a vaporisation chamber. Further, it is an object of the invention to maximize the vaporisation by maximizing the vaporisation area in a vaporisation chamber without a need for extensive constructional changes in exhaust gas systems in a vehicle.

As mentioned above, there have been attempts in the prior art to improve the vaporisation degree by means of creating swirl inside a vaporisation chamber. However, in connection with the known swirl generating devices, it has been noted that ammonia is not evenly distributed inside a vaporisation chamber in proximity to the outlet of the vaporisation chamber, which considerably affects the subsequent reaction in the SCR-catalyst to provide nitrogen gas and water from nitrogen oxides. Thus, an object of the present invention further is to provide as even distribution of the ammonia as possible inside a vaporisation chamber at the outlet of the vaporisation chamber. The even distribution at the outlet together with the maximized vaporisation provides a synergy effect during the reaction at the SCR-catalyst where NOₓ are reacted with ammonia to provide nitrogen gas and water. At the same time the problem of formation of urea lumps and urea crystals in a vaporisation chamber of a silencer are also minimized.

Another object of the present invention is to achieve a high degree of exhaust gas purification in connection with internal combustion engines.

The above objects are achieved with an exhaust gas system for an internal combustion engine according to the present invention defined in the appended claims.

The exhaust gas system comprises a selective catalytic reduction (SCR) purification system, which comprises an injection arrangement for adding a reducing agent to a flow of exhaust gases and an essentially circular cylindrical vaporisation chamber comprising an inner vaporisation chamber and an outer vaporisation chamber surrounding the inner vaporisation chamber, and an inlet end and an outlet end. The injection arrangement is arranged in fluid connection with the vaporisation chamber and upstream of the vaporisation chamber and downstream of the swirl-generating means. The inlet end of the vaporisation chamber is arranged in fluid connection with a swirl-generating means that provides swirl-motion to the exhaust gas flow and the reducing agent inside the inner vaporisation chamber. Further the outlet end of the vaporisation chamber is arranged in fluid connection with a swirl-retarding means arranged downstream of the inner vaporisation chamber Z to retard the swirl-motion of the exhaust gas flow and the reducing agent, as per the subject matter of claim 1. Z

Through the present invention an exhaust gas system comprising a vaporisation chamber that provides for a maximal vaporisation of water in a urea-containing solution to provide ammonium (NH₃) is provided. Through the swirl-generating means that is located in fluid connection with the inlet end of the vaporisation chamber it is also possible to maximize the vaporisation since the distance the urea-containing solution travels in a vaporisation chamber is maximized. Furthermore, the vaporisation is further improved since the vaporisation area in the vaporisation chamber is maximized due to the maximally utilized inside wall area of the vaporisation chamber obtained by the swirl motion. Therefore, there is no need for extensive constructional changes in an exhaust gas system, for example when it is arranged in a silencer. In addition to the advantages above, through the invention it is possible to provide as even distribution of the ammonia as possible inside the vaporisation chamber and at the outlet of the vaporisation chamber. Futhermore, by arranging the swirl-generating means flowwise upstream of the injection arrangement, the urea-containing solution does not hit the swirl-generating means, which reduces the risk for urea deposits on the swirl-generating means. The even distribution is obtained by retarding the swirl motion by means of the swirl-retarding means. The even distribution at the outlet together with the maximized vaporisation provides a synergy effect during the reaction at the SCR-catalyst where NOₓ are reacted with ammonia to provide nitrogen gas and water while the problem of formation of urea lumps and urea crystals in a vaporisation chamber and/or exhaust gas lines of the exhaust gas system is also minimized.

According to an embodiment of the invention, the swirl-generating means has a shape of an essentially truncated cone and comprises a closed first end, an open second end and a mantle. The mantle comprises a plurality of openings extending in an axial direction with respect to the centre axis of the vaporisation chamber. The exhaust gas flow is arranged to flow through the openings into the vaporisation chamber. The openings in the mantle form spoke-means that extend from the closed first end having a shape of a circular plate radially outwards towards a ring-shaped portion at the open second end of the swirl generating means. The ring-shaped portion connects the spoke means. At least one of the spoke means comprises a flange means extending in an axial direction with respect to the centre axis of the vaporisation chamber and in a radially inwards direction in respect of the radial extension of the vaporisation chamber. When the exhaust gas flow enters the swirl generating means, the flange means direct the exhaust gas flow radially inwards and thus create a swirl motion to the exhaust gas flow.

The flange means is asymmetrically arranged in respect of the spoke means and thus improves the swirl motion for the exhaust gas flow and the reducing agent in the vaporisation chamber. By asymmetrically arranged is meant that the spoke means comprises a flange means only on one side of the spoke means. Preferably, the flange means is inclined radially inwards at an angle of from about 10-60° in respect of the extension of the spoke means. By arranging an angle in respect of the spoke means, the intensity of the swirl motion can be adjusted inside the vaporisation chamber.

The number of spoke means is preferably from 6-14. Thus, it is possible to adjust the number of flanges. The spoke means are connected to the ring-shaped portion at the open second end. However, not all of the spoke means need to connect to the closed first end since they are connected by the ring-shaped portion, but suitably at least two of the spoke means is connected to the circular plate at the closed first end. In this way the area for the openings in the swirl-generating means can be maximized and thus the amount of the exhaust gas flow through the swirl-generating means can be maximized. However, preferably every other spoke means is connected to the circular plate at the closed first end to provide sufficient rigidity for the construction.

The mantle of the truncated cone-shaped swirl-generating means is suitably inclined at an angle of from 30-60° in respect of the centre axis of the vaporisation chamber. In this way, it is possible to direct the exhaust gas flow inside the vaporisation chamber in so that optimal swirl-motion can be obtained.

The swirl-retarding means comprises preferably at least one blade means extending in an axial direction with respect to the centre axis of the vaporisation chamber and in a radially inwards direction in respect of the radial extension of the vaporisation chamber. Thus, the blade means covers at least partly the outlet end of the vaporisation chamber at a distance from the outlet end and thereby a swirl-retarding effect can be improved.

The blade means may have a rectangular shape and may comprise a fold. The fold inclines the blade means radially inwards. Further, the fold divides the blade means into a first portion and to a second portion, wherein the angle between the first portion and the second portion is from 120 to 150°. The swirl-retarding means comprises preferably 2-8 blade means in fluid connection with the outlet end of the vaporisation chamber to obtain optimal retarding effect, and thus optimal distribution of ammonia inside the vaporisation chamber. Also, the blade means are preferably distributed evenly to surround the outlet end of the vaporisation chamber to obtain as even distribution of ammonia as possible and to avoid generation of further swirl motion.

The inner vaporisation chamber is symmetrically surrounded by an outer vaporisation chamber, and the inner vaporisation chamber is attached to the outer vaporisation chamber at a distance by means of attachment means. Also, the swirl-generating means can be attached to the outer vaporisation chamber by means of attachment means. Also, additionally or alternatively, the swirl-retarding means can be attached to the outer vaporisation chamber by means of attachment means. Therefore, a simple and compact construction can be provided.

The injection arrangement is suitably arranged on the surface of the circular plate of the closed first end facing the vaporisation chamber and is arranged to spray the reducing agent comprising an urea-containing solution as a spray plume directed so that at least a part of the droplets of the urea containing solution hits an inside wall of the inner vaporisation chamber. Thus, when the droplets hit the inside wall of the vaporisation chamber it is possible to evaporate the reducing agent in an effective way.

The exhaust gas system may further comprise at least one of a diesel oxidation catalyst (DOC), a diesel particulate filter (DPF) and an ammonia slip catalyst (ASC). The present invention also relates to a silencer comprising an exhaust system for an internal combustion engine as defined above, as per the subject matter of claim 12.

Further, the present invention relates to a vehicle comprising an exhaust system or a silencer as defined above, as per the subject matter of claim 13.

The above-mentioned objects are also achieved with a method for exhaust gas purification by means of the exhaust gas system as defined above, wherein the method comprises the steps of:
a) leading a flow of exhaust gases through a swirl-generating means arranged at an inlet end of a vaporisation chamber into the vaporisation chamber comprising an inner vaporisation chamber and an outer vaporisation chamber, wherein the exhaust gas flow obtains a swirl-motion;
b) upstream of the vaporisation chamber, injecting a reducing agent into the exhaust gas stream, wherein the reducing agent droplets follow the generated swirl motion of the exhaust gas flow;
c) retarding the obtained swirl motion of the exhaust gas flow containing vaporised ammonia derived from the reducing agent by means of a swirl-retarding means arranged downstream of the inner vaporisation chamber and in fluid connection with the outlet end of the vaporisation chamber;
d) leading the exhaust gases to an SCR-catalyst in a selective catalytic reduction (SCR)-system to reduce the amount of NOₓ in the exhaust gas flow as per the subject matter of claim 14.

Further objects, advantages and features of the invention are described in the following detailed description.

### BRIEF DESCRIPTION OF THE DRAWINGS

- Fig. 1: is a schematic side view of a vehicle comprising an exhaust gas system according to the present invention.
- Fig. 2: is a schematic drawing showing path of the exhaust gas flow through an exhaust gas system.
- Fig. 3: is a schematic cross-section view of a silencer comprising a vaporisation chamber according to one embodiment of the present invention.
- Fig. 4a: is a schematic side view of the inner vaporisation chamber, a swirlgenerating means and a swirl-retarding means according to an embodiment of the present invention.
- Fig. 4b: is a schematic side view of a vaporisation chamber comprising an outer and an inner vaporisation chamber and a swirl-retarding means according to an embodiment of the present invention.
- Fig. 5: is a schematic perspective view of a swirl-retarding means according to an embodiment of the present invention.
- Fig. 6a: shows uniformity of ammonia at the outlet end of a vaporisation chamber with a prior art arrangement only comprising a mixing arrangement at the outlet end of the vaporisation chamber
- Fig. 6b: shows measured uniformity of ammonia at the outlet end of a vaporisation chamber with a vaporisation chamber according to the present invention comprising both swirl-generating and swirl-retarding means.
- Fig. 7: is a flow chart showing schematically the steps of a method for exhaust gas purification by means of the exhaust gas system.

### DETAILED DESCRIPTION OF THE INVENTION

As mentioned above, combustion engines are used in various types of applications and vehicles today, e.g. in heavy vehicles such as trucks or buses, in cars, motorboats, steamers, ferries or ships. They may also be used in industrial engines and/or engine-powered industrial robots, power plants, e.g. electric power plants provided with a diesel generator, and in locomotives. The exhaust gas system according to the present invention is primary intended for an internal combustion engine and may be employed for example in a vehicle, e.g. in a truck or bus. The exhaust gas system can be placed in a silencer or components of the exhaust gas system may be arranged in another way, for example in a series of components and they do not need to be arranged in a silencer. For example in case of buses, it may be difficult to place the exhaust gas system in a silencer, since the floor of the bus needs to be low and/or the bus must contain a maximal amount of seats, whereby bulky silencers are difficult to place in a bus.

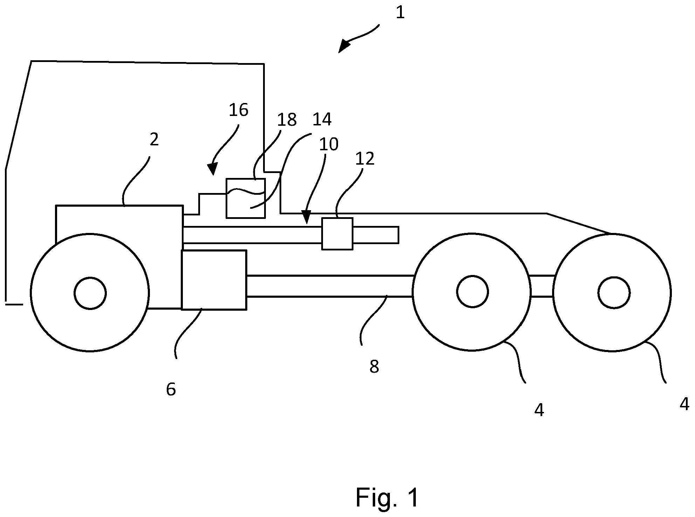

In Fig. 1 an example of a vehicle 1 comprising an exhaust gas system is shown in a schematic side view. The vehicle 1 is provided with an internal combustion engine 2 which powers the vehicle's tractive wheels 4 via a gearbox 6 and a propeller shaft 8. The internal combustion engine 2 is provided with an exhaust gas system 10 in which a silencer 12 is fitted. The exhaust gas system 10 may further comprise exhaust gas lines, exhaust manifold, control system, etc. which are not illustrated in detail. The engine 2 is powered by fuel 14 supplied to it via a fuel system 16 which comprises a fuel tank 18.

The exhaust gas system according to the present invention may be arranged in a silencer. The silencer comprises a casing comprising at least one inlet for leading an exhaust gas flow into the silencer. The silencer may comprise several inlets. The exhaust gas system may also comprise a diesel oxidation catalyst (DOC) which can be arranged downstream of the inlet in a silencer. The DOC is a unit designed to oxidize carbon monoxide, gas phase hydrocarbons and soluble organic fraction (SOF) of diesel particulate matter to CO₂ and H₂O. A diesel particulate filter (DPF) may be arranged downstream of the DOC, where DPF is a unit designed to remove diesel particulate matter or soot from the exhaust gas flow. The DPF can for example be a catalysed soot filter (CSF).

The exhaust gas system comprises a selective catalytic reduction (SCR) purification system which comprises an injection arrangement for adding a reducing agent to the exhaust gas flow in order to reduce NOₓ contents of the exhaust gas flow. The reducing agent preferably contains an ammonium source and may be for example a mixture of water and urea, e.g. a product with a trade name AdBlue^{®}, which comprises a mixture of 32.5% urea and water. The exhaust gas flow and the reducing agent are mixed and vaporised in a vaporisation chamber which is arranged downstream of the injection arrangement. Further, a selective catalytic reduction (SCR)-catalyst is arranged downstream of the vaporisation chamber. The SCR- catalyst may comprise vanadium, iron or copper catalyst which breaks down NOₓ to water vapour and nitrogen. An ammonia slip catalyst (ASC), which is a unit designed to convert any NH₃ slip to N₂ and H₂O, may be arranged downstream of the SCR-purification system. All these components may be arranged as separate components in series or in a silencer. In case the components are arranged in a silencer, an outlet for leading the exhaust gas flow out from the silencer is arranged downstream of the SCR- catalyst and the possible ASC. The silencer may comprise several outlets.

The exhaust gas system, or the silencer comprising the exhaust gas system, does not necessarily need to comprise a DOC and/or a DPF and/or an ASC. On the other hand, the exhaust gas system may comprise one or more of each of DOC, DPF and/or ASC. In case the exhaust gas system does not comprise a DOC and a DPF, the exhaust gas flow is arranged to flow to the injection arrangement. If the silencer comprises a DOC but not a DPF, the exhaust gas flow is arranged to flow through the DOC to the injection arrangement. The exhaust gas flow is arranged to flow through the DPF to the injection arrangement if the silencer comprises a DPF and not a DOC. If the exhaust gas system does not comprise an ASC the exhaust gas is arranged to flow from the SCR purification system to an outlet of the exhaust gas system or the silencer.

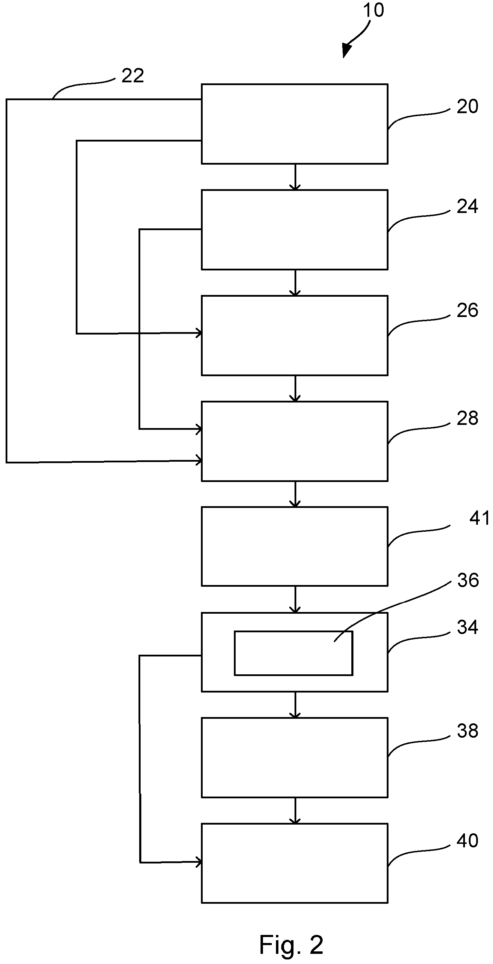

Fig. 2 depicts schematically examples of possible ways the flow of exhaust gases can flow through an exhaust gas system 10. The arrows in Fig. 2 illustrate the flow of exhaust gases 22, but the reference number 22 is only attached to one of the arrows. The exhaust gas system 10 comprises an inlet 20 for leading an exhaust gas flow 22 into the exhaust gas system 10 and a diesel oxidation catalyst (DOC) 24 is arranged downstream of the inlet 20. A diesel particulate filter (DPF) 26 is arranged downstream of the DOC 24 and the DPF 26 can for example be a catalysed soot filter (CSF).

A injection arrangement 28 is arranged downstream of the DPF 26 for adding a reducing agent to the exhaust gas flow 22 in order to reduce NOₓ contents of the exhaust gas flow 22. A vaporisation chamber 41 for vaporisation of the reducing agent 30, is arranged downstream of the injection arrangement 28. A selective catalytic reduction (SCR)-purification system 34 comprising a SCR-catalyst 36 is arranged downstream of the vaporisation chamber 41. An ammonia slip catalyst (ASC) 38 may be arranged downstream of the SCR-purification system 34 and an outlet 40 for leading the exhaust gas flow 22 out from the exhaust gas system 10 is arranged downstream of the ASC 38.

In case the exhaust gas system 10 does not comprise a DOC 24 and/or a DPF 26 and/or an ASC 38, the exhaust gas flow 22 is arranged to flow from the inlet 20 to the injection arrangement 28. If the exhaust gas system 10 comprises a DOC 24 and not a DPF 26 the exhaust gas flow 22 is arranged to flow from the inlet 20 to the DOC 24 and then to the injection arrangement 28. The exhaust gas flow 22 is arranged to flow from the inlet 20 to the DPF 26 and then to the injection arrangement 28 if the exhaust gas system 10 comprises a DPF 26 and not a DOC 24. If the exhaust gas system 10 does not comprise an ASC 38 the exhaust gas flow 22 is arranged to flow from the SCR purification system 34 to the outlet 40.

The exhaust gas system according to the invention will now be further described with reference to the appended drawings which show example embodiments of the invention but are not intended to limit the scope of the invention, which is defined in the appended claims.

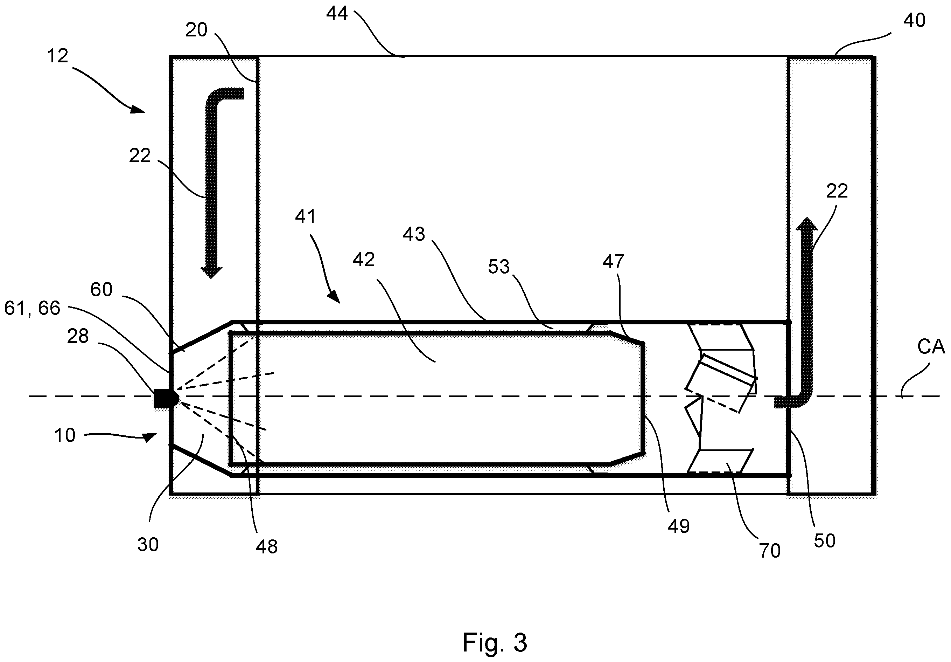

In Fig. 3 a silencer 12 which comprises components of an exhaust gas system is shown schematically. The silencer 12 comprises a casing 44 surrounding a vaporisation chamber 41 comprising an inner vaporisation chamber 42 and an outer vaporisation chamber 43. The casing 44 is preferably essentially rectangular although other shapes are also possible, such as essentially circular cylindrical or for example another shape that is essentially symmetrical around its centre axis. The casing 44 comprises at least one inlet 20 for leading a flow of exhaust gases into the vaporisation chamber 41 and at least one outlet 40 for leading the flow of exhaust gases out from the vaporisation chamber 41.

The vaporisation chamber 41 has an essentially circular cylindrical shape and has a centre axis CA. The vaporisation chamber 41 is essentially symmetrical around the centre axis CA. The diameter of the inner vaporisation chamber 42 should be dimensioned so that the droplets injected by an injection arrangement 28 can hit the inner wall of the chamber as close to the inlet end 48 of the vaporisation chamber 41 as possible. For example, the inner diameter of the inner vaporisation chamber 42 could be from 100-200 mm, such as 140-160 mm, but other dimensions are of course possible and should be adjusted to the requirements of the total exhaust gas system. The casing 44 of the silencer 12 is larger than the vaporisation chamber 41. The inlet end 48 is in fluid connection with the inlet 20 for leading a flow of exhaust gases into the vaporisation chamber 41 and an outlet end 50 of the vaporisation chamber 41 is in fluid connection with the outlet 40 for leading the flow of exhaust gases out from the vaporisation chamber 41.

An exhaust gas flow 22 illustrated by arrows in Fig. 3 is arranged to flow into the vaporisation chamber 42. The inner vaporisation chamber 42 is symmetrically surrounded by the outer vaporisation chamber 43 such that an air gap 53 between the inner vaporisation chamber 42 and the outer vaporisation chamber 43 is formed. Part of the hot exhaust gases flows through the air gap 53 and therefore heat the walls of the inner vaporisation chamber 42. Therefore it is possible to further improve the vaporisation degree.

Generally, the outer vaporisation chamber 43 can be longer in the direction of the centre axis CA than the inner vaporisation chamber 42 and the inner vaporisation chamber 42 may have a length corresponding about 70 to 80% of the length of the outer vaporisation chamber 43. The length of the outer vaporisation chamber 43 corresponds to the total length of the vaporisation chamber 41. The size of the outer vaporisation chamber 43 is also larger in radial direction than the size of the inner vaporisation chamber 42, and can have an inner diameter which is about 5-15% larger than the inner diameter of the inner vaporisation chamber 42 and could be for example from 105-230 mm, but other dimensions are possible. The diameter of the outer vaporisation chamber 43 corresponds to the diameter of the vaporisation chamber 41.

The inner vaporisation chamber 42 may have a portion 47 with narrowing diameter at the proximity of an outlet end 49 of the inner vaporisation chamber 42. The portion 47 may have a length of about 1-15% of the total length of the inner vaporisation chamber 42. The diameter of the inner vaporisation chamber 42 at the outlet end 49 can be about 80-90% of the diameter of the inner vaporisation chamber 42 before the diameter starts to narrow. In this way it is possible to further retard the swirl motion and optimise the distribution of the exhaust gas flow and the reducing agent. The outer vaporisation chamber 43 has also an outlet end 50, which is preferably arranged at a distance from the outlet end 49 of the inner vaporisation chamber 42. The outlet end 50 of the outer vaporisation chamber 43 corresponds to the outlet end of the vaporisation chamber 41.

According to the present invention, the exhaust gas system 10 comprises a selective catalytic reduction (SCR) purification system 34 which comprises an injection arrangement 28 for adding a reducing agent 30 to the exhaust gas flow 22. The injection arrangement 28 is arranged in fluid connection with the vaporisation chamber 41 and upstream of the vaporisation chamber 41. The reducing agent 30 is mixed with the exhaust gas flow 22 inside the vaporisation chamber 41. The selective catalytic reduction (SCR) purification system 34 also comprises a SCR-catalyst 36 which is arranged downstream of the vaporisation chamber 41.

Droplets of the reducing agent 30 are arranged to hit the inside wall, i.e. the wall facing the centre axis CA, of the inner vaporisation chamber 42 as close to the inlet end 48 as possible. By "as close to the inlet end as possible" is meant the inlet end and the area in proximity of the inlet end in the length direction, i.e. in axial direction or in the direction of the centre axis CA. Preferably, the reducing agent hits the inside wall at the inlet end 48 or in proximity of the inlet end 48 including about ½ of the length of the inner vaporisation chamber 42 measured from the inlet end 48. The forces created by the exhaust gas flow and the swirl-generating means then force the reducing agent to hit the inside wall throughout the whole length of the inner vaporisation chamber and thus create a swirl motion for the exhaust gas flow and the reducing agent. The injection arrangement 28 for adding a reducing agent 30 is preferably arranged to inject the reducing agent in a pre-determined injection direction. The injection arrangement 28 can be arranged in connection with a swirl-generating means 60. For example, and as illustrated by Fig. 3, the injection arrangement 28 is arranged on the surface of a circular plate 66 of a closed first end 61 of a swirl-generating means. Suitably the nozzles of the injection arrangement 28 face the vaporisation chamber 41 and are arranged to spray the reducing agent 30 comprising an urea-containing solution as a spray plume as illustrated in Fig. 3 so that at least a part of the droplets of the urea containing solution hits the inside wall of the inner vaporisation chamber 42.

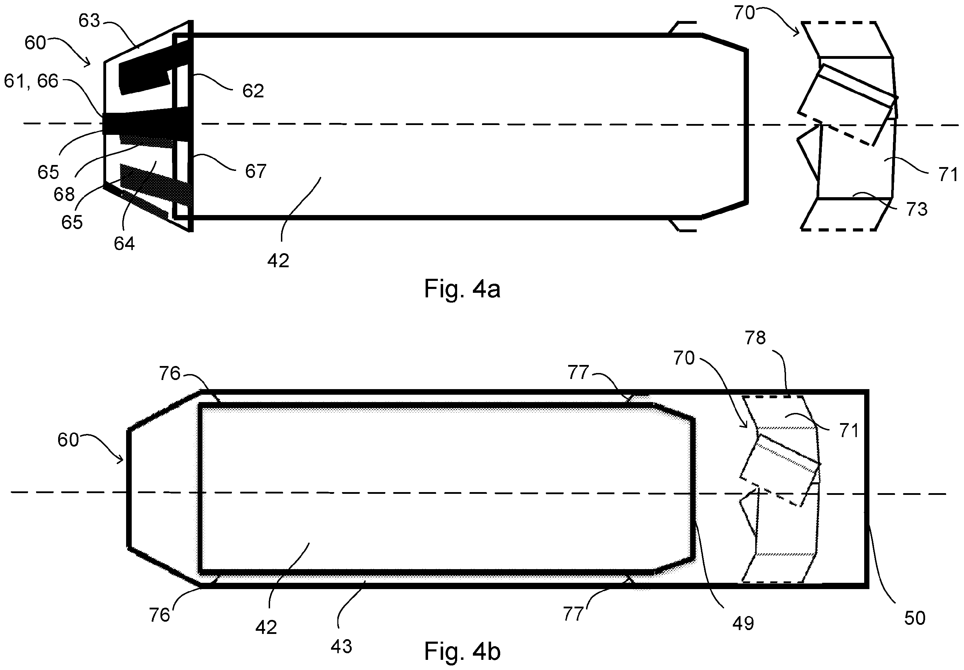

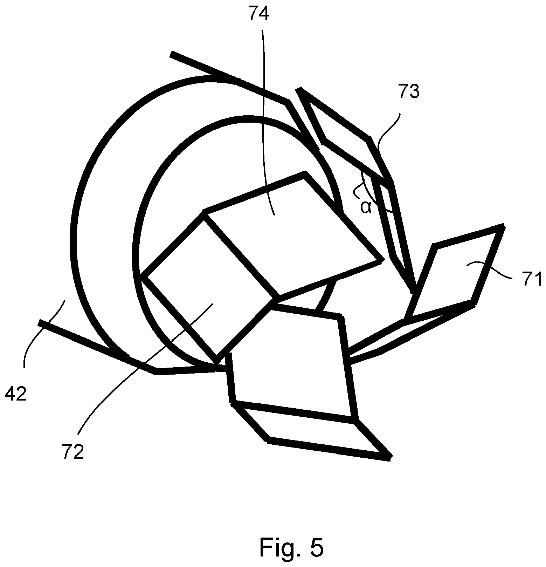

The swirl-generating means 60 is arranged upstream of the inlet end 48 and in fluid connection with the inlet end 48 of the vaporisation chamber 41 to provide swirl motion to the exhaust gas stream 22. Further, a swirl-retarding means 70 illustrated in more detail in Fig. 4b and 5 is arranged downstream of the outlet end 49 of the inner vaporisation chamber 42 and in fluid connection with the outlet end 50 of the outer vaporisation chamber 43 to retard the swirl motion of the exhaust gas flow.

An example of the swirl-generating means 60 is shown more in detail in Fig. 4a. The swirl-generating means 60 has a shape of an essentially truncated cone comprising a closed first end 61, an open second end 62 and a mantle 63. The mantle 63 comprises a plurality of openings 64 extending in an axial direction with respect to the centre axis CA of the vaporisation chamber 41 and the exhaust gas flow 22 is arranged to flow through the openings 64 into the vaporisation chamber 41. The openings 64 in the mantle 63 form spoke-means 65 that extend in the direction of centre axis CA from the closed first end 61 in the form of a circular plate 66 or having a shape of a circular plate 66 radially outwards towards a ring-shaped portion 67 at the open second end 62 of the swirl generating means 60. The ring-shaped portion 67 connects the spoke means 65, i.e. radially around the periphery of the ring-shaped portion 67.

At least one of the spoke means 65 comprises a flange means 68 extending in an axial direction with respect to the centre axis CA of the vaporisation chamber 41 and in a radially inwards direction in respect of the radial extension of the vaporisation chamber 41. The flange means 68 is inclined radially inwards at an angle of from about 10-60° in respect of the extension of the spoke means 65. The number of spoke means can be e.g. 6-14, and in Fig. 4a the number is 8. Each of the spoke means 65 is connected to the ring-shaped portion 67 at the open second end 62, and at least two of the spoke means 65 is connected to the circular plate 66 at the closed first end 61. In the embodiment shown in Fig 4a, every other spoke means 65 is connected to the circular plate 66 at the closed first end 61. The mantle 63 of the truncated cone-shaped swirl-generating means 60 is inclined at an angle of from 30-60° in respect of the centre axis CA of the vaporisation chamber 41. The swirl-generating means 60 is attached to the outer vaporisation chamber 43 by means of attachment means, which can be for example by welds or by detachable attachment means such as screws or rivets etc..

According to the invention, a swirl-retarding means 70 to retard the swirl-motion of the exhaust gas flow and the reducing agent within the vaporisation chamber 41 is arranged in fluid connection with the outlet end 49 of the inner vaporisation chamber 42. Suitably, the swirl-retarding means 70 is arranged between the outlet end 49 of the inner vaporisation chamber 42 and the outlet end 50 of the outer vaporisation chamber 43, as illustrated in Fig. 4b. An example embodiment of the swirl-retarding means 70 is shown in Fig. 4a, 4b and 5, respectively, and reference is made to these drawings. The swirl-retarding means may comprise at least one blade means 71 extending in an axial direction with respect to the centre axis CA of the vaporisation chamber 41 and is inclined in a radially inwards direction in respect of the radial extension of the vaporisation chamber 41, as can be best seen in Fig. 5. The blade means 71 has a rectangular shape and has a longer length direction than a width dimension. Each of the blade means 71 comprises a fold 73, which is best shown in Fig. 5. Only one reference sign is included in the drawing to improve the clarity. The fold 73 divides the blade means 71 in length direction into a first portion 72 and a second portion 74 and the fold 73 is illustrated in connection with one blade means 71 in Fig. 5. There is an angle α between the first portion 72 and the second portion 74 and it is illustrated in Fig. 5 in connection with one blade means 71. The angle α can be from 120 to 150°. The swirl-retarding means 70 comprising the blade means 71 can be attached to the outer vaporisation chamber 43 by means of attachment means 78. The inner vaporisation chamber 42 is attached to the outer vaporisation chamber 43 by means of attachment means 76, 77.

The length of the blade means 71 may be dimensioned to correspond to a length of 60 to 80% of the inner diameter of the outer vaporisation chamber 43 at the outlet end 50. The fold 73 divides the blade means into two portions in length direction, i.e. the fold is made perpendicular to the length direction of the blade means and in the direction of the width of the blade means, and the length of the first portion 72 located closest to an attachment point of the blade means 71 can be 30-70% of the total length of the blade means and correspondingly, the length of the second portion 74 of the blade means 71 can be 30-70% of the total length of the blade means 71. The width of the blade means, which corresponds to the extension of the blade means 71 in the direction of the centre axis CA of the vaporisation chamber can be for example 30-40% of the distance between the outlet end 49 of the inner vaporisation chamber 42 and the outlet end 50 of the outer vaporisation chamber 43. The blade means can be mounted inclined in respect to the axial direction, i.e. to the centre axis CA of the vaporisation chamber, and the angle can be about 10-30°.

The swirl-retarding means may comprise 1-8 blade means, and in the embodiments shown in Fig. 4a, 4b and 5 the amount is 4. All blade means 71 may have the same dimensions. Preferably, the blade means 71 are distributed evenly to surround the outlet end 49 of the vaporisation chamber 42 so that maximal swirl-retarding effect can be obtained.

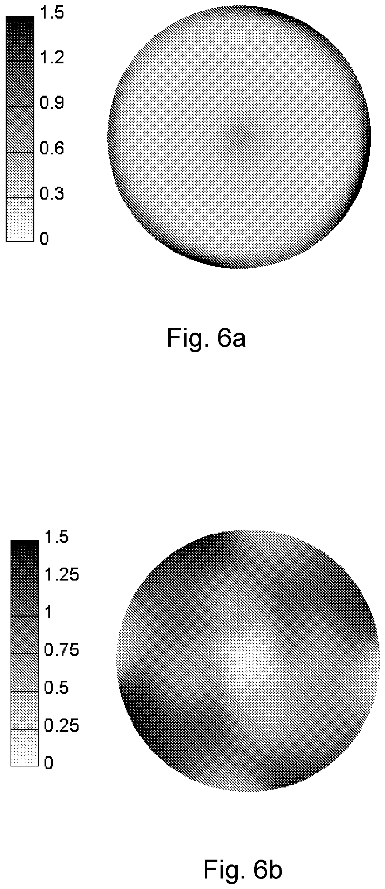

The distribution of ammonia at the outlet end of a prior art vaporisation chamber only comprising a swirl-generating means is illustrated in In Fig. 6a. The illustration is obtained by means of mathematical modelling. It can be seen that most of the ammonia is accumulated in proximity of the inner wall of the vaporisation chamber. The distribution of ammonia obtained by the present invention is illustrated in Fig. 6b. It can be seen that ammonia is distributed much more evenly throughout the whole cross-section of the vaporisation chamber.

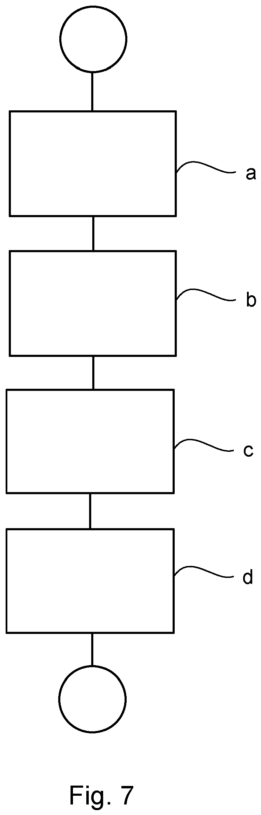

Fig. 7 shows in a flow chart the steps of the method for exhaust gas purification by means of the exhaust gas system 10 according to the present invention. The method comprises the following steps:
a) leading a flow of exhaust gases 22 through a swirl-generating means 60 arranged at an inlet end 48 of a vaporisation chamber 41 comprising an inner vaporisation chamber 42 and an outer vaporisation chamber 43 into the vaporisation chamber 41, wherein the exhaust gas flow 22 obtains a swirl-motion;
b) upstream of the vaporisation chamber 41, injecting a reducing agent 30 into the exhaust gas stream 22, wherein the reducing agent droplets follow the generated swirl motion of the exhaust gas flow 22;
c) retarding the obtained swirl motion of the exhaust gas flow 22 containing vaporised ammonia derived from the reducing agent by means of a swirl-retarding means 70 at the outlet end 50 of the vaporisation chamber 41;
d) leading the exhaust gases to an SCR-catalyst in a selective catalytic reduction (SCR)-system to reduce the amount of NOₓ in the exhaust gas flow.

## Claims

1. An exhaust gas system (10) for an internal combustion engine (2), comprising a selective catalytic reduction (SCR) purification system (34), which comprises an injection arrangement (28) for adding a reducing agent (30) to a flow of exhaust gases (22) and an essentially circular cylindrical vaporisation chamber (41) comprising an inner vaporisation chamber (42) and an outer vaporisation chamber (43) surrounding the inner vaporisation chamber (42), and an inlet end (48) and an outlet end (50), wherein the injection arrangement (28) is arranged in fluid connection with the vaporisation chamber (41) and upstream of the vaporisation chamber (41), wherein the inlet end (48) of the vaporisation chamber (41) is arranged in fluid connection with a swirl-generating means (60) that provides swirl-motion to the exhaust gas flow (22) and the reducing agent inside the inner vaporisation chamber (42), which swirl-generating means is arranged upstream of the injection arrangement, **characterized in that** the outlet end (50) of the vaporisation chamber (41) is arranged in fluid connection with a swirl-retarding means (70) arranged downstream of the inner vaporisation chamber (42) to retard the swirl-motion of the exhaust gas flow (22) and the reducing agent (30).

2. The exhaust gas system (10) according to claim 1, **characterized in that** the swirl-generating means (60) has a shape of an essentially truncated cone comprising a closed first end (61), an open second end (62) and a mantle (63), wherein the mantle (63) comprises a plurality of openings (64) extending in an axial direction with respect to the centre axis (CA) of the vaporisation chamber (41) and the exhaust gas flow is arranged to flow through the openings (64) into the vaporisation chamber (41), wherein the openings (64) in the mantle (63) form spoke-means (65) that extend from the closed first end (61) in the form of a circular plate (66) radially outwards towards a ring-shaped portion (67) at the open second end (62) of the swirl generating means (60), wherein the ring-shaped portion (67) connects the spoke means (65), and wherein at least one of the spoke means (65) comprises a flange means (68) extending in an axial direction with respect to the centre axis (CA) of the vaporisation chamber (41) and in a radially inwards direction in respect of the radial extension of the vaporisation chamber (41).

3. The exhaust gas system (10) according to claim 2, **characterized in that** the flange means (68) is inclined radially inwards at an angle of from about 10-60° in respect of the extension of the spoke means (65).

4. The exhaust gas system (10) according to any one of claims 2 or 3, **characterized in that** the number of spoke means (65) is 6-14, and wherein each of the spoke means (65) is connected to the ring-shaped portion (67) at the open second end (62), and at least two of the spoke means (65) is connected to the circular plate (66) at the closed first end (61).

5. The exhaust gas system (10) according to claim 4, **characterized in that** every other spoke means (65) is connected to the circular plate (66) at the closed first end (61).

6. The exhaust gas system (10) according to any one of claims 2 - 5, **characterized in that** the mantle (63) of the cone-shaped swirl-generating means (60) is inclined at an angle of from 30-60° in respect of the centre axis (CA) of the vaporisation chamber (41).

7. The exhaust gas system (10) according to any one of claims 2 - 6, **characterized in that** the injection arrangement (28) is arranged on the surface of the circular plate (66) of the closed first end (61) facing the vaporisation chamber (41) and is arranged to spray the reducing agent (30) comprising an urea-containing solution as a spray plume directed so that at least a part of the droplets of the urea containing solution hits an inside wall of the inner vaporisation chamber (42).

8. The exhaust gas system (10) according to any one of the preceding claims, **characterized in that** the swirl-retarding means (70) comprises at least one blade means (71), preferably 2 - 8 in fluid connection with the outlet end (50) of the vaporisation chamber (41), extending in an axial direction with respect to the centre axis (CA) of the vaporisation chamber (41) and in a radially inwards direction in respect of the radial extension of the vaporisation chamber (41).

9. The exhaust gas system (10) according to claim 8, **characterized in that** the blade means (71) has a rectangular shape and comprises a fold (73) that inclines the blade means (71) radially inwards, wherein the fold (73) divides the blade means (71) into a first portion (72) and to a second portion (74), wherein the angle between the first portion (72) and the second portion (74) is from 120 to 150°.

10. The exhaust gas system (10) according to claim 10, **characterized in that** the blade means (71) are distributed evenly to surround the outlet end (50) of the vaporisation chamber (41).

11. The exhaust gas system (10) according to any one of the preceding claims, **characterized in that** swirl-generating means (60) and the swirl-retarding means (70) is attached to the outer vaporisation chamber (43) by means of attachment means.

12. A silencer (12) for an internal combustion engine (2) **characterised in that** the silencer (12) comprises an exhaust system (10) according to any one of claims 1-11.

13. A vehicle, **characterized in that** the vehicle (1) comprises an exhaust system (10) according to any one of claims 1-11 or a silencer (12) according to claim 12.

14. A method for exhaust gas purification by means of an exhaust gas system (10) according to any one of claims 1 - 11, which method comprises the steps of:
a) leading a flow of exhaust gases (22) through a swirl-generating means (60) arranged at an inlet end (48) of a vaporisation chamber (41) comprising an inner vaporisation chamber (42) and an outer vaporisation chamber (43) into the vaporisation chamber (41), wherein the exhaust gas flow (22) obtains a swirl-motion;
b) upstream of the vaporisation chamber (41), injecting a reducing agent (30) into the exhaust gas stream (22), wherein the reducing agent droplets follow the generated swirl motion of the exhaust gas flow (22);
c) retarding the obtained swirl motion of the exhaust gas flow (22) containing vaporised ammonia derived from the reducing agent by means of a swirl-retarding means (70) arranged downstream of the inner vaporisation chamber (42) and in fluid connection with the outlet end (50) of the vaporisation chamber (41);
d) leading the exhaust gases to an SCR-catalyst in a selective catalytic reduction (SCR)-system to reduce the amount of NOₓ in the exhaust gas flow.

## Patentansprüche

1. Abgassystem (10) für einen Verbrennungsmotor (2), mit einem Reinigungssystem (34) zur selektiven katalytischen Reduktion (SCR), das eine Einspritzanordnung (28) zum Hinzufügen eines Reduktionsmittels (30) in einen Abgasstrom (22) und eine im Wesentlichen kreiszylindrische Verdampfungskammer (41) umfasst, die eine innere Verdampfungskammer (42) und eine die innere Verdampfungskammer (42) umgebende, äußere Verdampfungskammer (43) sowie ein Einlassende (48) und ein Auslassende (50) aufweist, wobei die Einspritzanordnung (28) in Fluidverbindung mit der Verdampfungskammer (41) und stromaufwärts der Verdampfungskammer (41) angeordnet ist, wobei das Einlassende (48) der Verdampfungskammer (41) in Fluidverbindung mit einer Drallerzeugungseinrichtung (60) angeordnet ist, die dem Abgasstrom (22) und dem Reduktionsmittel in der inneren Verdampfungskammer (42) eine Drallbewegung verleiht, wobei die Drallerzeugungseinrichtung stromaufwärts der Einspritzanordnung angeordnet ist, **dadurch gekennzeichnet, dass** das Auslassende (50) der Verdampfungskammer (41) in Fluidverbindung mit einer stromabwärts der inneren Verdampfungskammer (42) angeordneten Drallabbremsungseinrichtung (70) angeordnet ist, um die Drallbewegung des Abgasstroms (22) und des Reduktionsmittels (30) zu verlangsamen.

2. Abgassystem (10) nach Anspruch 1, **dadurch gekennzeichnet, dass** die Drallerzeugungseinrichtung (60) die Gestalt eines im Wesentlichen stumpfartigen Kegels mit einem geschlossenen ersten Ende (61), einem offenen zweiten Ende (62) und einem Mantel (63) hat, wobei der Mantel (63) mehrere Öffnungen (64) aufweist, die in einer Axialrichtung bezüglich der Mittelachse (CA) der Verdampfungskammer (41) verlaufen, und der Abgasstrom dazu vorgesehen ist, durch die Öffnungen (64) in die Verdampfungskammer (41) zu strömen, wobei die Öffnungen (64) in dem Mantel (63) Speicheneinrichtungen (65) bilden, die sich von dem geschlossenen ersten Ende (61) in Gestalt einer kreisförmigen Platte (66) radial auswärts in Richtung auf einen ringförmigen Abschnitt (67) an dem offenen zweiten Ende (62) der Drallerzeugungseinrichtung (60) erstrecken, wobei der ringförmige Abschnitt (67) die Speicheneinrichtungen (65) verbindet und wobei zumindest eine der Speicheneinrichtungen (65) eine Flanscheinrichtung (68) aufweist, die in einer Axialrichtung bezüglich der Mittelachse (CA) der Verdampfungskammer (41) und in einer radial einwärts gerichteten Richtung bezüglich der Radialerstreckung der Verdampfungskammer (41) verläuft.

3. Abgassystem (10) nach Anspruch 2, **dadurch gekennzeichnet, dass** die Flanscheinrichtung (68) unter einem Winkel von ungefähr 10 bis 60° bezüglich der Erstreckung der Speicheneinrichtung (65) radial einwärts geneigt ist.

4. Abgassystem (10) nach einem der Ansprüche 2 oder 3, **dadurch gekennzeichnet, dass** die Anzahl der Speicheneinrichtungen (65) 6 bis 14 ist, wobei jede der Speicheneinrichtungen (65) an dem offenen zweiten Ende (62) mit dem ringförmigen Abschnitt (67) verbunden ist und mindestens zwei der Speicheneinrichtungen (65) an dem geschlossenen ersten Ende (61) mit der kreisförmigen Platte (66) verbunden sind.

5. Abgassystem (10) nach Anspruch 4, **dadurch gekennzeichnet, dass** jede andere Speicheneinrichtung (65) an dem geschlossenen ersten Ende (61) mit der kreisförmigen Platte (66) verbunden ist.

6. Abgassystem (10) nach einem der Ansprüche 2 bis 5, **dadurch gekennzeichnet, dass** der Mantel (63) der kegelförmigen Drallerzeugungseinrichtung (60) unter einem Winkel von 30 bis 60° zur Mittelachse (CA) der Verdampfungskammer (41) geneigt ist.

7. Abgassystem (10) nach einem der Ansprüche 2 bis 6, **dadurch gekennzeichnet, dass** die Einspritzanordnung (28) auf der Oberfläche der kreisförmigen Platte (66) des geschlossenen ersten Endes (61) angeordnet ist, die der Verdampfungskammer (41) zugewandt ist, und dazu angeordnet ist, das eine harnstoffhaltige Lösung enthaltende Reduktionsmittel (30) als eine Sprühfahne zu versprühen, die so gerichtet ist, dass zumindest ein Teil der Tröpfchen der harnstoffhaltigen Lösung auf eine Innenwand der inneren Verdampfungskammer (42) trifft.

8. Abgassystem (10) nach einem der vorhergehenden Ansprüche, **dadurch gekennzeichnet, dass** die Drallabbremsungseinrichtung (70) wenigstens eine Schaufelblatteinrichtung (71), vorzugsweise 2 bis 8, in Fluidverbindung mit dem Auslassende (50) der Verdampfungskammer (41) aufweist, die in einer Axialrichtung bezüglich der Mittelachse (CA) der Verdampfungskammer (41) und in einer radial einwärts gerichteten Richtung bezüglich der Radialerstreckung der Verdampfungskammer (41) verlaufen.

9. Abgassystem (10) nach Anspruch 8, **dadurch gekennzeichnet, dass** die Schaufelblatteinrichtung (71) eine rechteckige Gestalt hat und einen Falz (73) aufweist, der die Schaufelblatteinrichtung (71) radial nach innen neigt, wobei der Falz (73) die Schaufelblatteinrichtung (71) in einen ersten Abschnitt (72) und einen zweiten Abschnitt (74) unterteilt, wobei der Winkel zwischen dem ersten Abschnitt (72) und dem zweiten Abschnitt (74) zwischen 120 und 150° beträgt.

10. Abgassystem (10) nach Anspruch 9, **dadurch gekennzeichnet, dass** die Schaufelblatteinrichtungen (71) gleichmäßig zum Umgeben des Auslassendes (50) der Verdampfungskammer (41) verteilt sind.

11. Abgassystem (10) nach einem der vorhergehenden Ansprüche, **dadurch gekennzeichnet, dass** die Drallerzeugungseinrichtung (60) und die Drallabbremsungseinrichtung (70) durch eine Befestigungseinrichtung an der äußeren Verdampfungskammer (43) angebracht sind.

12. Schalldämpfer (12) für einen Verbrennungsmotor (2), **dadurch gekennzeichnet, dass** der Schalldämpfer (12) ein Abgassystem (10) nach einem der Ansprüche 1 bis 11 umfasst.

13. Fahrzeug, **dadurch gekennzeichnet, dass** das Fahrzeug (1) ein Abgassystem (10) nach einem der Ansprüche 1 bis 11 oder einen Schalldämpfer (12) nach Anspruch 12 umfasst.

14. Verfahren zur Abgasreinigung mittels eines Abgassystems (10) nach einem der Ansprüche 1 bis 11, wobei das Verfahren die Schritte umfasst:
a) Leiten eines Abgasstroms (22) durch eine Drallerzeugungseinrichtung (60), die an einem Einlassende (48) einer Verdampfungskammer (41) mit einer inneren Verdampfungskammer (42) und einer äußeren Verdampfungskammer (43) angeordnet ist, in die Verdampfungskammer (41), wobei der Abgasstrom (22) eine Drallbewegung erfährt,
b) Einspritzen eines Reduktionsmittels (30) in den Abgasstrom (22) stromaufwärts der Verdampfungskammer (41), wobei die Reduktionsmitteltröpfchen der erzeugten Drallbewegung des Abgasstroms (22) folgen,
c) Verlangsamen der erhaltenen Drallbewegung des Abgasstroms (22), der aus dem Reduktionsmittel erhaltenes, verdampftes Ammoniak enthält, mittels einer Drallabbremsungseinrichtung (70), die stromabwärts der inneren Verdampfungskammer (42) und in Fluidverbindung mit dem Auslassende (50) der Verdampfungskammer (41) angeordnet ist,
d) Leiten der Abgase zu einem SCR-Katalysator in einem selektiven katalytischen Reduktions (SCR)-System, um die Menge an NOₓ in dem Abgasstrom zu verringern.

## Revendications

1. Système de gaz d'échappement (10) pour un moteur à combustion interne (2) comprenant un système de purification par réduction catalytique sélective (SCR) (34), qui comprend un agencement d'injection (28) pour ajouter un agent réducteur (30) à un flux de gaz d'échappement (22) et une chambre de vaporisation cylindrique essentiellement circulaire (41) comprenant une chambre de vaporisation interne (42) et une chambre de vaporisation externe (43) entourant la chambre de vaporisation interne (42), et une extrémité d'entrée (48) et une extrémité de sortie (50), dans lequel l'agencement d'injection (28) est agencé en liaison fluidique avec la chambre de vaporisation (41) et en amont de la chambre de vaporisation (41), dans lequel l'extrémité d'entrée (48) de la chambre de vaporisation (41) est agencée en liaison fluidique avec un moyen de génération de tourbillonnement (60) qui fournit un mouvement tourbillonnaire au flux de gaz d'échappement (22) et l'agent réducteur à l'intérieur de la chambre de vaporisation interne (42), lequel moyen de génération de tourbillonnement est agencé en amont de l'agencement d'injection, **caractérisé en ce que** l'extrémité de sortie (50) de la chambre de vaporisation (41) est agencée en liaison fluidique avec un moyen de retardement de tourbillonnement (70) agencé en aval de la chambre de vaporisation interne (42) pour retarder le mouvement tourbillonnaire du flux de gaz d'échappement (22) et l'agent réducteur (30).

2. Système de gaz d'échappement (10) selon la revendication 1, **caractérisé en ce que** le moyen de génération de tourbillonnement (60) a une forme d'un cône essentiellement tronqué comprenant une première extrémité fermée (61), une deuxième extrémité ouverte (62) et un manchon (63), dans lequel le manchon (63) comprend une pluralité d'ouvertures (64) s'étendant dans une direction axiale par rapport à l'axe central (CA) de la chambre de vaporisation (41) et le flux de gaz d'échappement est agencé pour s'écouler à travers les ouvertures (64) dans la chambre de vaporisation (41), dans lequel les ouvertures (64) dans le manchon (63) forment des moyens de rayon (65) qui s'étendent depuis la première extrémité fermée (61) sous la forme d'une plaque circulaire (66) radialement vers l'extérieur vers une partie en forme d'anneau (67) au niveau de la deuxième extrémité ouverte (62) du moyen de génération de tourbillonnement (60), dans lequel la partie en forme d'anneau (67) relie les moyens de rayon (65), et dans lequel au moins l'un des moyens de rayon (65) comprend un moyen de bride (68) s'étendant dans une direction axiale par rapport à l'axe central (CA) de la chambre de vaporisation (41) et dans une direction radialement vers l'intérieur par rapport à l'extension radiale de la chambre de vaporisation (41).

3. Système de gaz d'échappement (10) selon la revendication 2, **caractérisé en ce que** le moyen de bride (68) est incliné radialement vers l'intérieur selon un angle d'environ 10-60° par rapport à l'extension des moyens de rayon (65).

4. Système de gaz d'échappement (10) selon l'une quelconque des revendications 2 ou 3, **caractérisé en ce que** le nombre de moyens de rayon (65) est de 6-14, et dans lequel chacun des moyens de rayon (65) est relié à la partie en forme d'anneau (67) au niveau de la deuxième extrémité ouverte (62), et au moins deux des moyens de rayon (65) sont reliés à la plaque circulaire (66) au niveau de la première extrémité fermée (61) .

5. Système de gaz d'échappement (10) selon la revendication 4, **caractérisé en ce que** chaque autre moyen de rayon (65) est relié à la plaque circulaire (66) au niveau de la première extrémité fermée (61).

6. Système de gaz d'échappement (10) selon l'une quelconque des revendications 2-5, **caractérisé en ce que** le manchon (63) du moyen de génération de tourbillonnement en forme de cône (60) est incliné selon un angle de 30-60° par rapport à l'axe central (CA) de la chambre de vaporisation (41).

7. Système de gaz d'échappement (10) selon l'une quelconque des revendications 2-6, **caractérisé en ce que** l'agencement d'injection (28) est agencé sur la surface de la plaque circulaire (66) de la première extrémité fermée (61) faisant face à la chambre de vaporisation (41) et est agencé pour pulvériser l'agent réducteur (30) comprenant une solution contenant de l'urée comme un jet de pulvérisation dirigé de telle sorte qu'au moins une partie des gouttelettes de la solution contenant de l'urée heurte une paroi intérieure de la chambre de vaporisation interne (42).

8. Système de gaz d'échappement (10) selon l'une quelconque des revendications précédentes, **caractérisé en ce que** le moyen de retardement de tourbillonnement (70) comprend au moins un moyen d'ailette (71), de préférence 2 - 8 en liaison fluidique avec l'extrémité de sortie (50) de la chambre de vaporisation (41), s'étendant dans une direction axiale par rapport à l'axe central (CA) de la chambre de vaporisation (41) et dans une direction radialement vers l'intérieur par rapport à l'extension radiale de la chambre de vaporisation (41) .

9. Système de gaz d'échappement (10) selon la revendication 8, **caractérisé en ce que** le moyen d'ailette (71) a une forme rectangulaire et comprend un pli (73) qui incline le moyen d'ailette (71) radialement vers l'intérieur, dans lequel le pli (73) divise le moyen d'ailette (71) en une première portion (72) et en une seconde portion (74), dans lequel l'angle entre la première portion (72) et la seconde portion (74) est de 120 à 150°.

10. Système de gaz d'échappement (10) selon la revendication 10, **caractérisé en ce que** les moyens d'ailette (71) sont répartis de manière régulière pour entourer l'extrémité de sortie (50) de la chambre de vaporisation (41).

11. Système de gaz d'échappement (10) selon l'une quelconque des revendications précédentes, **caractérisé en ce que** le moyen de génération de tourbillonnement (60) et le moyen de retardement de tourbillonnement (70) sont fixés à la chambre de vaporisation externe (43) au moyen d'un moyen de fixation.

12. Silencieux (12) pour un moteur à combustion interne (2), **caractérisé en ce que** le silencieux (12) comprend un système d'échappement (10) selon l'une quelconque des revendications 1-11.

13. Véhicule, **caractérisé en ce que** le véhicule (1) comprend un système d'échappement (10) selon l'une quelconque des revendications 1-11 ou un silencieux (12) selon la revendication 12.

14. Procédé pour la purification des gaz d'échappement au moyen d'un système de gaz d'échappement (10) selon l'une quelconque des revendications 1 - 11, lequel procédé comprend les étapes :
a)d'acheminement d'un flux de gaz d'échappement (22) à travers un moyen de génération de tourbillonnement (60) agencé au niveau d'une extrémité d'entrée (48) d'une chambre de vaporisation (41) comprenant une chambre de vaporisation interne (42) et une chambre de vaporisation externe (43) dans la chambre de vaporisation (41), dans lequel le flux de gaz d'échappement (22) obtient un mouvement tourbillonnaire ;
b) en amont de la chambre de vaporisation (41), d'injection d'un agent réducteur (30) dans le flux de gaz d'échappement (22), dans lequel les gouttelettes d'agent réducteur suivent le mouvement tourbillonnaire généré du flux de gaz d'échappement (22) ;
c)de retardement du mouvement tourbillonnaire obtenu du flux de gaz d'échappement (22) contenant de l'ammoniac vaporisé dérivé de l'agent réducteur au moyen d'un moyen retardateur de tourbillonnement (70) agencé en aval de la chambre de vaporisation interne (42) et en liaison fluidique avec l'extrémité de sortie (50) de la chambre de vaporisation (41) ;
d) d'acheminement des gaz d'échappement vers un catalyseur SCR dans un système de réduction catalytique sélective (SCR) pour réduire la quantité de NOx dans le flux de gaz d'échappement.
